# EUROPÄISCHE PATENTSCHRIFT

(11) **EP 3 060 030 B1**
(45) Veröffentlichungstag und Bekanntmachung des Hinweises auf die Patenterteilung: **08.04.2020**
(21) Anmeldenummer: 16155174.2
(22) Anmeldetag: 11.02.2016
(51) Int. Cl.: H05B 33/08

(54) **VORRICHTUNG ZUM BETRIEB VON LEUCHTMITTELN**
DEVICE FOR OPERATING LIGHT SOURCES
DISPOSITIF DE FONCTIONNEMENT DE MOYENS D'ECLAIRAGE

(30) Priorität: 18.02.2015 DE 202015100759 U
(43) Veröffentlichungstag der Anmeldung: 24.08.2016
(73) Patentinhaber: Tridonic GmbH & Co KG, 6851 Dornbirn (AT); Zumtobel Lighting GmbH, 6850 Dornbirn (AT)
(72) Erfinder: Böckle, Raphael, 6800 Feldkirch (AT); Hollenstein, Markus, 6380 Rankweil (AT); Wynnyczenko, Oliver, 6890 Lustenau (AT)
(74) Vertreter: Rupp, Christian

(56) Entgegenhaltungen:
- WO-A1-93/20677
- WO-A1-2006/079937
- DE-U1-202005 019 739
- DE-U1-202011 005 045
- JP-A- 2010 245 054
- US-A1- 2014 368 124

## Beschreibung

Die vorliegende Erfindung betrifft eine Vorrichtung zum Betreiben von Leuchtmitteln, wobei hierfür ein Betriebsgerät zum Ansteuern der Leuchtmittel zum Einsatz kommt. Insbesondere ist eine Anordnung zum Betrieb von Leuchtmitteln mit einem verbesserten Verhalten bei Überspannungen auf den eingangsseitigen Versorgungsleitungen des Betriebsgeräts, sowie eine entsprechend eingerichtete Leuchte Gegenstand der Erfindung.

Es sind aus der Literatur Vorrichtungen und Schaltungsanordnungen bekannt, die für Beleuchtungszwecke Leuchtdioden mit entsprechenden Betriebsgeräten (Vorschaltgeräte, LED Konverter) zur Ansteuerung der Leuchtdioden zeigen.

Die internationale Veröffentlichung WO 2014/113827 A1 offenbart ein LED-Modul, eine mit dem LED-Modul ausgestattete Lampe und ein Verfahren zum Betrieb eines LED Moduls. Das LED-Modul umfasst mindestens eine Leuchtdiode (LED) und ist über einen Eingangsanschluss des LED-Moduls mit einem Betriebsgerät gekoppelt ist. Das Betriebsgerät versorgt das LED Modul mit Energie. Das Betriebsgerät kann dabei so ausgeführt sein, dass es einen Ausgangsstrom für das LED-Modul mittels geeigneter schaltungstechnischer Maßnahmen begrenzt. Damit kann das Risiko einer Zerstörung der LED durch zu große Stromstärken vermindert werden. Das LED-Modul weist weiter ein steuerbares Schaltmittel auf, dass eine leitende Verbindung zwischen dem Eingangsanschluss und der mindestens einen Leuchtdiode unterbricht, wenn die Eingangsspannung des LED-Moduls einen bestimmten Wert übersteigt. Damit wird eine verbesserte Überstrombegrenzung für die Leuchtdiode realisiert, die die Auswirkungen von Spannungsspitzen und Überspannungen auf einer Eingangsversorgungspannung des Betriebsgeräts vermindert.

Ein Betriebsgerät oder auch Vorschaltgerät für eine Lampe ist aus der EP 0 634 087 B2 bekannt. Das gezeigt Vorschaltgerät ist insbesondere dazu ausgelegt, ein Flackern mit der Netzfrequenz, wie es für Gasentladungslampen bei geringen Beleuchtungsstärken in einem gedimmten Betriebszustand zu beobachten ist, zu unterdrücken. Zu diesem Zweck schlägt das Vorschaltgerät für Gasentladungslampen verschiedene schaltungstechnische Maßnahmen vor. Beispielsweise wird der schaltungsinterne Bezugspotentialanschluss des Vorschaltgeräts wechselstrommäßig mit der Schutzerde PE des speisenden Wechselstromnetzes verbunden. Eine solche Verbindung wäre durch einen Kondensator innerhalb des Vorschaltgeräts zu realisieren.

Die Druckschrift US 2014/0368124 A1 offenbart Treiber zum Ansteuern von Lichtschaltungen mit Leuchtdioden umfassend Isolierschaltungen mit Primärteilen und Sekundärteilen und Führungsschaltungen zum Führen von Gleichtakt-Überspannungssignale an Isolationsschaltungen Referenzpotentiale. Die Isolationsschaltungen können ausgebildet sein, erste Teile der Gleichtakt-Überspannungssignale von den Lichtschaltungen weg zu leiten, und die Führungsschaltungen können ausgebildet sein, zweite Teile der Gleichtakt-Überspannungssignale von den Lichtschaltungen weg zu leiten, wobei die zweiten Teile kleiner sind als die ersten Teile sind. Die Führungsschaltung kann Kondensatoren zum Verbinden erster Anschlüsse der Sekundärteile mit den Referenzpotentialen aufweisen, wobei die Werte der Kondensatoren größer als die Werte der parasitären Kapazitäten von den Isolationsschaltungen sind. Der Treiber umfasst keinen Kondensator, der die primären und sekundären Teile miteinander verbindet.

Auf den eingangsseitigen (primärseitigen) Versorgungsleitungen eines Betriebsgeräts für LEDs können Überspannungen entstehen, die zu erheblichen Schäden in elektronischen Schaltungen führen können. Wenn die im Betriebsgerät möglicherweise hierfür vorgesehenen Schutzmaßnahmen nicht ausreichen und auf der Ausgangsseite (Sekundärseite) des Betriebsgeräts durch die eingangsseitige Überspannung verursachte Überspannungen auf den Versorgungsleitungen für LEDs auftreten, besteht ein Risiko für die LEDs bis hin zu deren Zerstörung.

Ausgehend von dem zuvor beschriebenen Problem liegt der vorliegenden Erfindung die Aufgabenstellung zugrunde, die durch netzseitige Überspannungen verursachten Risiken für Leuchtmittel wie beispielsweise Leuchtdioden, die über vorgeschaltete Betriebsgeräte versorgt werden. zu verringern.

Die Aufgabe wird durch eine Anordnung zum Betreiben von Leuchtmitteln mit den Merkmalen des Anspruchs 1 gelöst.

Eine erfindungsgemäße Vorrichtung umfasst ein Betriebsgerät für ein Leuchtmittel und zumindest ein Leuchtmittel, wobei das Leuchtmittel insbesondere mindestens eine Leuchtdiode umfasst. Das Leuchtmittel weist zumindest einen Eingangsanschluss zur Kopplung des Leuchtmittels mit dem Betriebsgerät auf. Die Vorrichtung zeichnet sich dadurch aus, dass sie ein mit dem zumindest einen Eingangsanschluss des Leuchmittels elektrisch verbundenes Impedanzelement umfasst, das diesen Eingangsanschluss mit einer virtuellen Masse verbindet. Als virtuelle Masse wird ein leitendes Element bezeichnet, das nicht mit dem PE-Leiter des Versorgungsnetzes auf demselben Potential liegen muss.

Das an der Verbindung zwischen dem Betriebsgerät und dem Leuchtmittel parallel angeordnete Impedanzelement bewirkt eine Verringerung von sekundärseitigen Überspannungen und führt damit zu einem verbesserten Schutz der nachgeschalteten Leuchtmittel. Das Impedanzelement ist einfach zu verwirklichen und kann auch in Leuchten nachträglich eingesetzt werden, die keine weiteren schaltungstechnischen Maßnahmen zum Schutz der Leuchtmittel vor sekundärseitigen Überspannungen aufweisen.

Es werden also mit Hilfe der erfindungsgemäßen Lösung die Möglichkeiten zum Betreiben von Leuchtmitteln hinsichtlich Lebensdauer der Leuchtmittel und Ausfallwahrscheinlichkeit der Leuchte erweitert, wobei diese Vorteile mit einem nur geringen schaltungstechnischen Mehraufwand erreicht werden.

Vorteilhafte Weiterbildungen der Erfindung sind Gegenstand der abhängigen Ansprüche.

Gemäß der vorliegenden Erfindung ist zusätzlich es besonders bevorzugt, wenn die Vorrichtung als Impedanzelement mindestens ein kapazitives Element (Kondensator) umfasst. Ein kapazitives Element bewirkt die effektive Ableitung von transienten Überspannungen auf den sekundärseitigen Versorgungsleitungen des Beriebsgeräts zu dem Leuchtmittel und verringert die Überspannungen so.

Die Vorrichtung umfasst in einer weiteren vorteilhaften Ausführungsform das Impedanzelement mit einem parallel zu dem mindestens einen Kondensator angeordneten ohmschen Widerstand. Der ohmsche Widerstand erweitert die Wirkung des Impedanzelements durch die Ableitung elektrostatischer Aufladungen.

Die Vorrichtung entsprechend einer weiteren Ausführungsform umfasst ein so angeordnetes Impedanzelement, dass es von dem zumindest einen Eingangsanschluss des Leuchtmittels zu einem leitfähigen Gehäuse der Leuchte elektrisch verbindend angeordnet ist, wobei das leitfähige Gehäuse als virtuelle Masse der Leuchte dient.

In weiteren Ausführungsformen der erfindungsgemäßen Vorrichtung ist das Impedanzelement entweder in einer Ausgangsstufe des Betriebsgeräts und damit innerhalb eines Gehäuses des Betriebsgeräts, oder außerhalb des Betriebsgeräts und zugleich außerhalb des Leuchtmittels an eine von üblicherweise zwei Versorgungsleitungen, oder direkt an dem Eingangsanschluss des Leuchtmittels und zugleich innerhalb des Leuchtmittels bzw. dessen Gehäuse angeordnet.

Die technische Aufgabe wird ebenfalls durch eine Leuchte gelöst, die eine Vorrichtung nach einer der vorstehenden Ausführungsformen umfasst.

In einer bevorzugten Ausführungsform der Leuchte ist die Leuchte insbesondere für den Außenbereich verwendbar ausgelegt.

Nachfolgend wird die Erfindung anhand der beiliegenden Zeichnung näher erläutert. Dabei zeigt
- Fig.1: eine schematische Ausgestaltung einer erfindungsgemäßen Anordnung aus einem Betriebsgerät zum Betreiben von Leuchtmitteln, einem Leuchtmittel und dessen Ansteuerung,
- Fig.2: ein Beispiel und eine schematische Ausbildung eines erfindungsgemäßen Impedanzelements,
- Fig.3: eine Seitenansicht und eine Schnittdarstellung A - A einer Leuchte für den Außenbereich, die die erfindungsgemäße Anordnung aus einem Betriebsgerät zum Betreiben von Leuchtmitteln und Leuchtmittel umfasst,
- Fig.4: eine Messanordnung zur Bestimmung der Effektivität der erfindungsgemäßen Anordnung aus einem Betriebsgerät zum Betreiben von Leuchtmitteln,
- Fig.5: eine Tabelle mit Ergebnissen einer Messreihe mit der Messanordnung nach Fig. 4,
- Fig.6: eine weitere Messanordnung zur Bestimmung der Effektivität der erfindungsgemäßen Anordnung aus einem Betriebsgerät zum Betreiben von Leuchtmitteln, und
- Fig.7: eine Tabelle mit Ergebnissen einer Messreihe mit der Messanordnung nach Fig. 6,
- Fig.8: eine schematische Ausgestaltung einer erfindungsgemäßen Anordnung aus einem Betriebsgerät zum Betreiben von Leuchtmitteln, einem Leuchtmittel und dessen Ansteuerung.

Dabei zeigen in den Figuren gleiche Bezugszeichen dieselben oder entsprechende Elemente. Aus Gründen der Darstellung wird in der folgenden Beschreibung vorteilhafter Ausführungsbeispiele der erfindungsgemäßen Lehre auf eine Wiederholung weitgehend verzichtet.

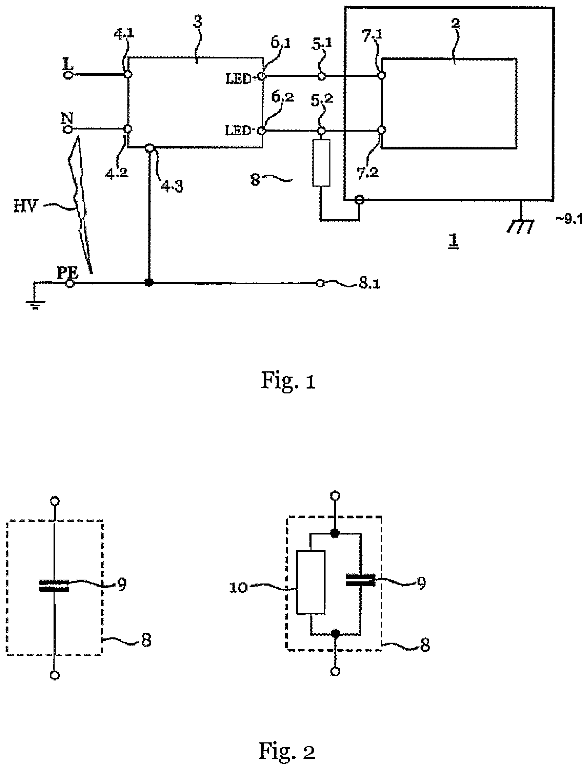

In der Fig.1 wird anhand eines Blockschaltbildes ein Ausführungsbeispiel einer erfindungsgemäßen Anordnung 1 aus einem Betriebsgerät 3 zum Betreiben von Leuchtmitteln, einem Leuchtmittel 2 und des Impedanzelements 8 gezeigt. Das Betriebsgerät 3 kann dabei entgegen dem zeichnerisch dargestellten Fall ohne Einschränkung der Allgemeingültigkeit der nachfolgenden Ausführungen auch eine Vielzahl von Leuchtmitteln 2 versorgen.

Als Leuchtmittel 2 wird ohne Einschränkung der Allgemeinheit ein Modul umfassend eine oder eine Mehrzahl Leuchtdioden (light emitting diodes - kurz: LED) angenommen. Derartige Leuchtmittel 2 sind für die Ausleuchtung von Räumen ebenso wie für die Nutzung für Beleuchtungszwecke im Außenbereich zunehmend üblich. Das Leuchtmittel 2 wird über die Eingangsanschlüsse 7.1, 7.2 mit einer Versorgungsspannung versorgt. Die einzelnen LEDs sind dabei oftmals in Serie geschaltet. Das Leuchtmittel 2 kann weiter über eine Wärmesenke oder Wärmeableiter zur Abfuhr von Wärme von den einzelnen LEDs umfassen. Die LEDs sind als Halbleiterbauelemente insbesondere auch durch zu hohe Versorgungsströme und/oder Überspannungsspitzen der Versorgungsspannung gefährdet. Die in diesem Fall auftretende Wärme kann zur thermischen Zerstörung der LED führen. Um das Leuchtmittel 2 ist ein Kühlelement 9.1 angeordnet, welcher bevorzugt metallisch ausgestaltet ist. Das Kühlelement 9.1 kann von dem Schutzleiter PE getrennt sein.

Das Betriebsgerät 3 ist mit dem Leuchtmittel 2 verbunden und versorgt das Leuchtmittel 3 mit Energie über Versorgungsleitungen. Das Betriebsgerät 3 kann dabei für den Betrieb einer Vielzahl unterschiedlicher Leuchtmittel 2 konfigurierbar ausgelegt sein. Das Betriebsgerät 3 kann so ausgestaltet sein, dass es eine Einrichtung zur Begrenzung des über die mit dem Leuchtmittel 2 verbundenen Ausgängen LED⁺ 6.1 und LED⁻ 6.2 fließenden Ausgangsstroms umfasst. Damit kann ein Risiko der Beschädigung oder Zerstörung für das oder die Leuchtmittel 2 verringert werden.

Das Betriebsgerät 3 ist für die Erzeugung der Versorgungsspannung für das Leuchtmittel 2 aus einer Hauptstromversorgung (Netz) ausgelegt. Hierzu weist das in Fig. 1 gezeigte Betriebsgerät 3 einen ersten Anschluss L 4.1 für einen aktiven Leiter L (umgangssprachlich als Phase bezeichnet), einen zweiten Anschluss 4.2 für einen Neutralleiter N (Nullleiter) sowie einen dritten Anschluss 4.3 für einen Schutzleiter PE auf.

Das Betriebsgerät 3 verfügt üblicherweise über eine Gleichrichterschaltung zur Erzeugung von Gleichspannung aus der über das Stromnetz erhaltenen Wechselspannung, einen Konverter für die Umwandlung der erzeugten Gleichspannung in eine geeignete Versorgungsspannung für die nachgeschalteten Leuchtmittel 2.

Durch Überspannungen in der primärseitigen Hauptstromversorgung des Betriebsgeräts 3 können dabei Schäden in den elektronischen Schaltkreisen des Betriebsgeräts 3 verursacht werden. Solche Überspannungen können als transiente Überspannungen durch Gewitter, Blitze und vergleichbare atmosphärische Erscheinungen, elektrostatische Entladungen, Schaltvorgängen im Hauptversorgungsnetz, Schalten von Verbrauchern, usw. verursacht sein und daher vom Einsatzort der Anordnung abhängig sein. Dabei können Überspannungen mit Spannungswerten in der Größenordnung mehrerer kV, beispielsweise 2 oder 4 kV auftreten. Die Zeitdauer derartiger Überspannungen kann sich im Bereich von Pulslängen einiger 10 µs bis einige 100 µs bewegen. Die Anstiegszeiten für Überspannungspulse aufgrund elektrostatischer Entladungen können sich im Bereich unterhalb einer ns bewegen.

Transiente Überspannungen durch externe Störquellen können kapazitiv über Influenz oder induktiv über Versorgungs- und/oder Signalleitungen oder über starke elektromagnetische Felder und/oder elektromagnetische Wellen verursacht werden.

Zum Schutz des Betriebsgeräts 3 selbst sowie um ein Durchschlagen entsprechender Spannungsspitzen über die Versorgungsspannung auf das Leuchtmittel 2 und damit eine Beschädigung des Leuchtmittels 2 zu vermeiden, können seitens des Herstellers des Betriebsgeräts 3 Schutzmaßnahmen innerhalb des Betriebsgeräts 3 getroffen sein. Es kann beispielsweise in einer Treiberschaltung des Betriebsgeräts 3 und damit innerhalb eines Gehäuses des Betriebsgeräts 3 eine Überspannungsschutzvorrichtung zwischen einem aktiven Leiter L und einem Neutralleiter N geschaltet sein. Überspannungsschutzvorrichtungen innerhalb elektronischer Geräte können beispielsweise mit Suppressordioden, Varistoren, Schutzdioden sowie mit Störschutzkondensatoren realisiert werden.

Eine Überspannungsschutzvorrichtung zwischen einen aktiven Leiter L und einem Neutralleiter N ist allerdings nicht geeignet, durch asymmetrische Überspannungen, also Überspannungen zumindest eines der Leiter L, N gegen den Schutzleiter PE, verursachte Überspannungen auf den Versorgungsleitungen zu dem Leuchtmittel 3 zu verhindern.

Die erfindungsgemäße Vorrichtung aus einer Anordnung eines Betriebsgeräts 3 und eines Leuchtmittels 2 weist allerdings zusätzlich ein Impedanzelement 8 verbunden mit einem Anschlusspunkt 5.2 auf der Versorgungsleitung LED⁻ zu einem Anschlusspunkt des Kühlelements 9.1 welches eine virtuelle Masse aufweist, diese virtuelle Masse kann auf einem anderen Potential als der PE-Schutzleiter liegen,. Dieses Impedanzelement 8 kann ebenso auf der Versorgungsleitung LED⁺ von einem weiteren Anschlusspunkt 5.1 zu der virtuellen Masse verbunden angeordnet sein. Eine virtuelle Masse ist ein Punkt einer elektrischen (Schaltungs-) Anordnung, der trotz fließender Ströme ein Massepotential aufweist, jedoch nicht direkt mit der Schutzerde bzw. dem Schutzleiter PE verbunden sein muss.

Eine solche virtuelle Masse kann durch ein größeres Bauteil einer Leuchte ausgebildet werden, die mit dem Leuchtmittel 3 ausgestattet ist. Dabei handelt es sich um ein Bauteil aus leitfähigem Material, beispielsweise ein metallisches Gehäuse der Leuchte. Das Potential dieser virtuellen Masse in Form eines metallischen Gehäuses muss dabei nicht mit dem Potential des PE-Leiters in engerem Sinne übereinstimmen.

In der Fig. 2 werden mögliche Ausführungsbeispiele für das Impedanzelement 8 dargestellt. In der linken Teilfigur ist das Impedanzelement 8 durch eine Kondensator 9 als kapazitives Element ausgebildet. In der rechten Teilfigur umfasst das Impedanzelement 8 eine Parallelschaltung eines Kondensators 9 als kapazitivem Element und eines Widerstands 10 als ohmsches Element. Der ohmsche Widerstand 10 ist insbesondere zur Ableitung elektrostatischer Aufladungen geeignet wie sie speziell bei nicht mit dem PE-Leiter verbundenen Gehäuseteilen auftreten können. Typische Werte für geeignete Kapazitäten des Kondensators 9 liegen bei 4,7 µF bei einer entsprechend hohen Spannungsfestigkeit von einigen kV. Ein geeigneter Widerstand 10 zeigt ohmsche Widerstandwerte von 1MΩ.

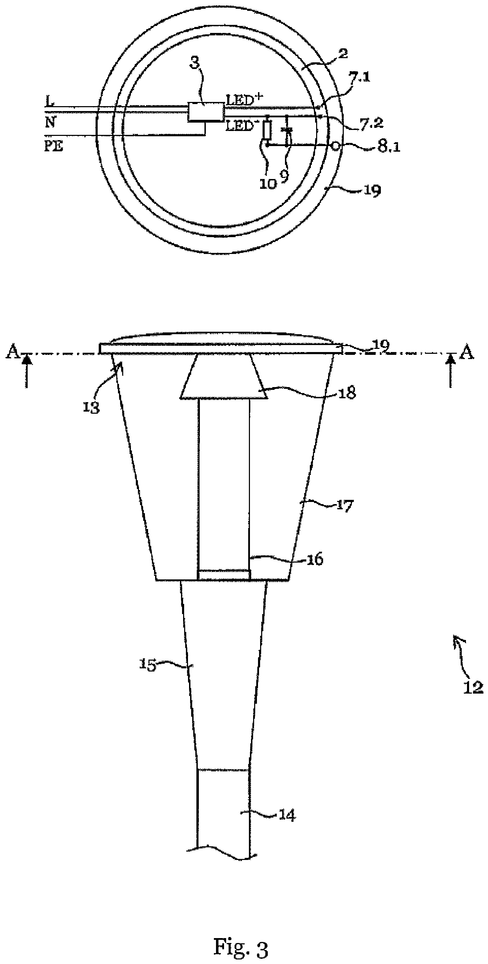

Im Folgenden wird anhand der Fig.3 eine Anwendung eines Ausführungsbeispiels in einer Außenleuchte, also einer Leuchte, die für den Einsatz außerhalb geschlossener Räume vorgesehen ist, gezeigt. Die untere Hälfte der Fig. 3 gibt dabei eine horizontale Ansicht der Leuchte 13 mit ihren wesentlichen Bauteilen wieder.

Die Leuchte 13 umfasst ein Tragrohr 14 mit dem die Leuchte 13 auf dem Boden oder in einer Wandhalterung befestigt ist. Der obere Tragrohrabschnitt 15 ist aufgeweitet und kann damit Raum für elektrische Baugruppen der Leuchte 13, elektrische Anschlüsse für innerhalb des Tragrohrs 14 laufende Hauptversorgungsleitungen, Energiespeicher wie Akkus, und weitere elektrische Bauteile bieten. Der eigentliche Leuchtenkörper umfasst eine auf den oberen Tragrohrabschnitt 15 konisch geformten transparentes und damit lichtdurchlässiges Gehäuse 17, eine mittig darin befindliche Halterung 16 in Form eines Rohrabschnitts. Am oberen Ende der rohrförmigen Halterung 16 ist eine Reflektor 18 angeordnet. Der Reflektor 18 ist ebenfalls konisch geformt und bestimmt die Abstrahlcharakteristik des durch das Leuchtmittel 2 erzeugten Lichts. Das Leuchtmittel 2 ist in Form eines ringförmigen Trägers mit einer Vielzahl von LEDs an der Innenseite des im Wesentlichen plattenförmigen Leuchtendeckels 19 angeordnet. Der Leuchtendeckel 19 hat eine kreisförmige Form und schließt das transparente, lichtdurchlässige Gehäuse 17 und damit den Leuchtenkörper nach oben ab. Damit sind sämtliche elektrischen und optischen Bauteile geschützt im Inneren eines geschlossenen Leuchtenkörpers untergebracht. Dies ist insbesondere im Hinblick auf eine Einsatz der Leuchte 12 im Außenbereich vorteilhaft.

Der Leuchtendeckel 19 ist bevorzugt aus Metall gefertigt und dient als Aufnahme für das Leuchtmittel 2 sowie das Betriebsgerät 3 und das Impedanzelement 8. Das Impedanzelement 8 ist in dem in Fig. 3 dargestellten Fall ohne Einschränkung der Allgemeingültigkeit aus einem Kondensator 9 und einem ohmschen Widerstand 10 zusammengesetzt.

Die obere Hälfte der Fig. 3 gibt dabei eine (Innen-) Ansicht der Baugruppe des Leuchtendeckels 19 der Leuchte 13 mit ihren wesentlichen Bauteilen wieder, wenn die Lampe entlang der horizontalen Schnittlinie A-A in Richtung der eingezeichneten Pfeile in Fig. 3 betrachtet wird. Dabei sind auch die Eingangsanschlüsse 7.1, 7.2 des Leuchtmittels 2 und die elektrische Verbindung des Kondensators 9 und des Widerstands 10 ausgehend von einem Anschlusspunkt 5.1 auf der Versorgungsleitung LED⁺ mit dem metallischen Lampendeckel 19 an einem Anschlusspunkt 8.1 dargestellt. Der Anschluss 5.1 ist im gezeigten Fall mit der Verbindungsleitung LED⁺ zwischen dem Anschlusspunkt 6.1 des Betriebsgeräts 3 und dem Anschlusspunkt 7.1 des Leuchtmittels 2 leitend verbunden. Der Anschluss 5.2 ist im gezeigten Fall mit der Verbindungsleitung LED⁻ zwischen dem Anschlusspunkt 6.2 des Betriebsgeräts 3 und dem Anschlusspunkt 7.2 des Leuchtmittels 2 elektrisch leitend verbunden.

Es besteht keine direkte elektrische Verbindung zwischen dem Leuchtendeckel 19 und dem Schutzleiter PE des Hauptversorgungsnetzes.

Der ohmsche Widerstand 10 dient der Potentialkompensation. Dies ist im gezeigten Anwendungsbeispiel einer Leuchte 12 für den Außenbereich notwendig, da lediglich eine virtuelle Schutzerde vorhanden ist. Wettereffekte wie Wind, trockenes und kaltes Wetter können insbesondere in diesem Fall elektrostatische Aufladungen erzeugen, die wiederum elektrostatische Entladungen aufgrund von Spannungen mit Werten bis zu einigen kV verursachen. Diese Spannungen können das Leuchtmittel 2 und insbesondere Leuchtdioden beschädigen und zerstören. Der im gezeigten Ausführungsbeispiel gezeigte Widerstand 10 ist geeignet, dieses Risiko zu verhindern. Ein typischer Wert von 1 MΩ wird im gezeigten Ausführungsbeispiel für den Widerstand 10 verwendet. Andere Werte sind jedoch ebenso möglich.

In Fig. 3 ist ein Kondensator 9 mit einer Kapazität von 4,7 nF und einer (Wechsel-) Spannungsfestigkeit von 4 kVAC zwischen die Verbindungsleitung LED⁻ und den Leuchtendeckel 19 als virtuelle Masse geschaltet. Der Kondensator 9 kann ebenso zwischen die Verbindungsleitung LED⁺ und den Leuchtendeckel 19 als virtueller Masse geschaltet werden.

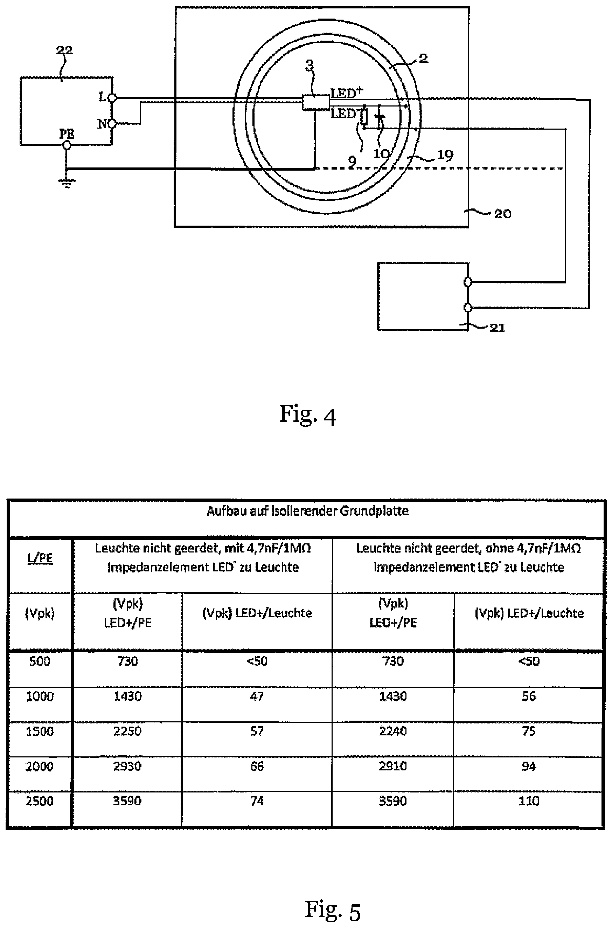

Im Folgenden wird anhand der Figuren 4 bis 7 in zwei Messreihen mit jeweils einem spezifischen Messaufbau anhand des Leuchtendeckels 19 mit der entsprechenden Schaltungsanordnung gemäß dem Ausführungsbeispiel nach Fig. 3 die vorteilhaften Eigenschaften der Erfindung gezeigt. Dabei wird eine Überspannung zwischen dem L-Leiter bzw. dem Neutralleiter N einerseits und dem Schutzleiter PE andererseits auf der Primärseite des Betriebsgeräts 3 eingespeist. Es ist für die Ergebnisse unerheblich, ob die Überspannung zwischen der Phase L und Schutzleiter PE oder zwischen dem Neutralleiter N und dem Schutzleiter PE erzeugt wird.

Eine Übersicht Fig. 4 eines ersten Messaufbaus wird in Fig. 4 gezeigt. Dabei wird der Leuchtendeckel 19 nach Fig. 3 auf einer Grundplatte 20 aus Holz angeordnet. Der Leuchtendeckel 19 ist nicht mit dem Schutzleiter PE elektrisch leitend verbunden, stellt aber eine virtuelle Masse für das Leuchtmittel 2 dar.

Als Betriebsgerät 3 wird ein LED Konverter verwendet. Das Leuchtmittel 2 ist ein LED Modul..

Ein Netzgerät 22 wird dazu verwendet, Überspannungen zwischen dem Leiter L und dem Schutzleiter PE mit Spitzenspannungen Vpk zwischen 500 V und 2500 V an die primärseitigen Eingänge 4.1, 4.3 des Betriebsgeräts 3 zu legen. Dabei wird durch Messungen sichergestellt, dass es für die Messergebnisse unerheblich ist, ob die Überspannungen zwischen den Eingängen 4.1 und 4.3, also zwischen Phase L und Schutzerde PE, oder zwischen dem Nulleiter N und dem Schutzleiter PE auftreten.

Mit einem Oszilloskop 21 und einem in Figur 4 nicht dargestellten Leistungsmesskopf wird die Versorgungsspannung LED⁺ des Betriebsgeräts 3 und die in dieser Versorgungsspannung auftretenden Spannungsspitzen Vpk ermittelt. Diese Spannungsspitzen Vpk werden zum Einen gegenüber der Schutzerde PE entsprechend der gestrichelten Verbindung in Fig. 4 und zum Anderen gegenüber der durch dem metallische Leuchtendeckel 19 ausgebildeten virtuellen Masse gemäß der durchgezogenen Verbindung gemessen.

Die Messungen werden weiter für eine erfindungsgemäße Anordnung mit einem Impedanzelement 8 zwischen der Versorgungspannungsleitung LED⁻ und dem Leuchtendeckel 19 sowie für eine Anordnung ohne ein Impedanzelement 8 durchgeführt. Das verwendete Impedanzelement 8 umfasst dabei einen Kondensator mit 4,7 nF und einen parallel dazu geschalteten ohmschen Widerstand mit 1 MΩ.

Die mit dem vorstehend geschilderten Versuchsaufbau und Versuchsablauf ermittelten Messwerte sind in der Tabelle nach Fig. 5 dargestellt. Dabei kann der Tabelle nach Fig. 5 entnommen werden, dass das erfindungsgemäße Impedanzelement 8 aufgrund der parallelen Kapazität 9 das Überspannungsverhalten der Versorgungsspannung für das Leuchtmittel 2 signifikant verbessert. Die gemessenen Spitzenspannungen auf der Versorgungsleitung LED⁺ wird für eine primärseitige Spannungsspitze in Höhe von 2500 V von eine sekundärseitigen Spannungsspitze von 110 V, gemessen gegenüber dem Leuchtendeckel 19, auf eine sekundärseitigen Spannungsspitze von 74 V gemessen gegenüber dem Leuchtendeckel 19 verringert.

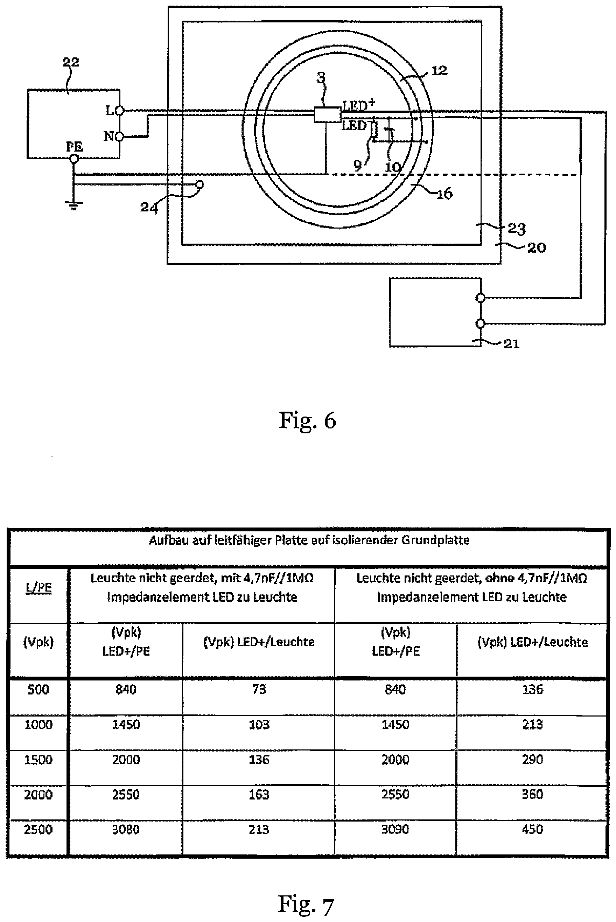

In Fig. 6 wird ein zu Fig. 4 entsprechender Messaufbau gezeigt. Der Aufbau unterscheidet sich von dem in Fig. 4 gezeigten dahingehend, dass der Leuchtendeckel 19 auf einer mit Schutzerde verbundenen isolierten Metallplatte 23 angeordnet ist. Die Metallplatte 23 ist an einem Erdungspunkt 24 mit dem Schutzleiter PE elektrisch leitend verbunden. Die Metallplatte 23 ist auf der Grundplatte 20 aus Holz angeordnet und auf der Metallplatte 23 befindet sich auf einer in der Zeichnung nicht dargestellten isolierenden Schicht der Leuchtendeckel 19. Der Leuchtendeckel 19 hat keinen elektrisch leitenden Kontakt zu der geerdeten Metallplatte 23. Für die weiteren Einzelheiten des Messaufbaus nach Fig. 6 genügt Verweis auf die entsprechenden Abschnitte des Messaufbaus nach Fig. 4.

Es werden die entsprechenden Messwerte zu der in Fig. 5 dargestellten Tabelle mit dem Messaufbau nach Fig. 6 ermittelt. Die entsprechend ermittelten Messwerte für den Messaufbau nach Fig. 5 sind in der Tabelle nach Fig. 7 dargestellt.

Dabei kann der Tabelle nach Fig. 7 entnommen werden, dass das erfindungsgemäße Impedanzelement 8 aufgrund der parallelen Kapazität 9 das Überspannungsverhalten der Versorgungsspannung für das Leuchtmittel 2 wiederum deutlich verbessert. Die gemessenen Spitzenspannungen auf der Versorgungsleitung LED⁺ wird für eine primärseitige Spannungsspitze in Höhe von 2500 V von eine sekundärseitigen Spannungsspitze von 450 V gemessen gegenüber dem Leuchtendeckel 19 auf eine sekundärseitigen Spannungsspitze von 213 V gemessen gegenüber dem Leuchtendeckel 19 nahezu halbiert.

Die Ergebnisse der Tabellen nach Fig. 5 und Fig. 7 zusammenfassend, lässt sich feststellen, dass das Verhalten der Vorrichtung 1 mit einem erfindungsgemäßen Impedanzelement 8 das Verhalten bei transienten Überspannungen in erheblichem Maß verbessert. Insbesondere für den Versuchsaufbau nach Fig. 6 mit einer isolierten Metallplatte auf einer hölzernen Grundplatte wird eine gemessene Spitzenspannung zwischen der Verbindungsleitung LED⁺ und dem Leuchtendeckel 19 in etwa halbiert, wenn das erfindungsgemäße kapazitive Element des Impedanzelements 8 eingesetzt wird.

Auch wenn die Erfindung vorstehend an Hand eines Impedanzelements 8 aus einem Kondensator 9 und einem Widerstand 10 entsprechend der bevorzugten Kombination erläutert wurde, so sind auch andere schaltungstechnische Realisierungen mit geeigneten Kombinationen induktiver, kapazitiver und ohmscher Elemente möglich, um die vorteilhafte Wirkung zu erzielen. Weiter können die Komponenten des Impedanzelements 8 in einer Leuchte 12 mit einem bereits vorhandenen Betriebsgerät 3 installiert werden. Dies kann insbesondere von Vorteil für Hersteller von Leuchten 12 sein, wenn das eingesetzte Betriebsgerät 3 das Problem der Überspannung an den Versorgungsspannungsausgängen LED⁺, LED⁻ zeigt.

Die Komponenten des Impedanzelements 8 gemäß der Erfindung können ebenso nach einer Ausgangsstufe am Ausgang des Betriebsgeräts 3 vorgesehen werden.

Es ist gleichermaßen möglich lediglich den Kondensator 10, oder aber ein Impedanzelement 8 bestehend aus einem Kondensator 9 und einem Widerstand 10 einzusetzen.

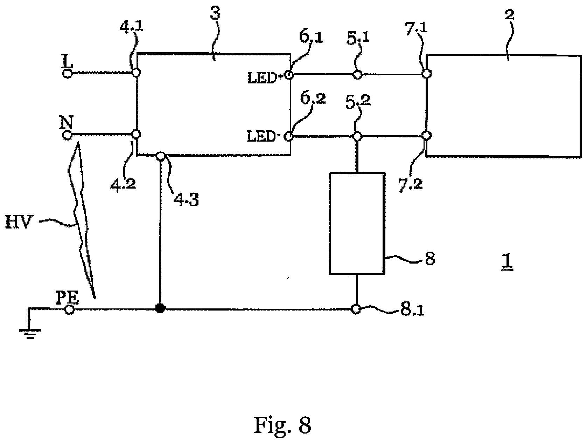

In der Fig. 8 wird anhand eines Blockschaltbildes ein Ausführungsbeispiel einer erfindungsgemäßen Anordnung 1 aus einem Betriebsgerät 3 zum Betreiben von Leuchtmitteln, einem Leuchtmittel 2 und des Impedanzelements 8 gezeigt. Das Betriebsgerät 3 kann dabei entgegen dem zeichnerisch dargestellten Fall ohne Einschränkung der Allgemeingültigkeit der nachfolgenden Ausführungen auch eine Vielzahl von Leuchtmitteln 2 versorgen.

Als Leuchtmittel 2 wird ohne Einschränkung der Allgemeinheit ein Modul umfassend eine oder eine Mehrzahl Leuchtdioden (light emitting diodes - kurz: LED) angenommen. Derartige Leuchtmittel 2 sind für die Ausleuchtung von Räumen ebenso wie für die Nutzung für Beleuchtungszwecke im Außenbereich zunehmend üblich. Das Leuchtmittel 2 wird über die Eingangsanschlüsse 7.1, 7.2 mit einer Versorgungsspannung versorgt. Die einzelnen LEDs sind dabei oftmals in Serie geschaltet. Das Leuchtmittel 2 kann weiter über eine Wärmesenke oder Wärmeableiter zur Abfuhr von Wärme von den einzelnen LEDs umfassen. Die LEDs sind als Halbleiterbauelemente insbesondere auch durch zu hohe Versorgungsströme und/oder Überspannungsspitzen der Versorgungsspannung gefährdet. Die in diesem Fall auftretende Wärme kann zur thermischen Zerstörung der LED führen.

Das Betriebsgerät 3 ist mit dem Leuchtmittel 2 verbunden und versorgt das Leuchtmittel 3 mit Energie über Versorgungsleitungen. Das Betriebsgerät 3 kann dabei für den Betrieb einer Vielzahl unterschiedlicher Leuchtmittel 2 konfigurierbar ausgelegt sein. Das Betriebsgerät 3 kann so ausgestaltet sein, dass es eine Einrichtung zur Begrenzung des über die mit dem Leuchtmittel 2 verbundenen Ausgängen LED⁺ 6.1 und LED⁻ 6.2 fließenden Ausgangsstroms umfasst. Damit kann ein Risiko der Beschädigung oder Zerstörung für das oder die Leuchtmittel 2 verringert werden.

Das Betriebsgerät 3 ist für die Erzeugung der Versorgungsspannung für das Leuchtmittel 2 aus einer Hauptstromversorgung (Netz) ausgelegt. Hierzu weist das in Fig. 8 gezeigte Betriebsgerät 3 einen ersten Anschluss L 4.1 für einen aktiven Leiter L (umgangssprachlich als Phase bezeichnet), einen zweiten Anschluss 4.2 für einen Neutralleiter N (Nullleiter) sowie einen dritten Anschluss 4.3 für einen Schutzleiter PE auf.

Das Betriebsgerät 3 verfügt üblicherweise über eine Gleichrichterschaltung zur Erzeugung von Gleichspannung aus der über das Stromnetz erhaltenen Wechselspannung, einen Konverter für die Umwandlung der erzeugten Gleichspannung in eine geeignete Versorgungsspannung für die nachgeschalteten Leuchtmittel 2.

Durch Überspannungen in der primärseitigen Hauptstromversorgung des Betriebsgeräts 3 können dabei Schäden in den elektronischen Schaltkreisen des Betriebsgeräts 3 verursacht werden. Solche Überspannungen können als transiente Überspannungen durch Gewitter, Blitze und vergleichbare atmosphärische Erscheinungen, elektrostatische Entladungen, Schaltvorgängen im Hauptversorgungsnetz, Schalten von Verbrauchern, usw. verursacht sein und daher vom Einsatzort der Anordnung abhängig sein. Dabei können Überspannungen mit Spannungswerten in der Größenordnung mehrerer kV, beispielsweise 2 oder 4 kV auftreten. Die Zeitdauer derartiger Überspannungen kann sich im Bereich von Pulslängen einiger 10 µs bis einige 100 µs bewegen. Die Anstiegszeiten für Überspannungspulse aufgrund elektrostatischer Entladungen können sich im Bereich unterhalb einer ns bewegen. Transiente Überspannungen durch externe Störquellen können kapazitiv über Influenz oder induktiv über Versorgungs- und/oder Signalleitungen oder über starke elektromagnetische Felder und/oder elektromagnetische Wellen verursacht werden.

Zum Schutz des Betriebsgeräts 3 selbst sowie um ein Durchschlagen entsprechender Spannungsspitzen über die Versorgungsspannung auf das Leuchtmittel 2 und damit eine Beschädigung des Leuchtmittels 2 zu vermeiden, können seitens des Herstellers des Betriebsgeräts 3 Schutzmaßnahmen innerhalb des Betriebsgeräts 3 getroffen sein. Es kann beispielsweise in einer Treiberschaltung des Betriebsgeräts 3 und damit innerhalb eines Gehäuses des Betriebsgeräts 3 eine Überspannungsschutzvorrichtung zwischen einem aktiven Leiter L und einem Neutralleiter N geschaltet sein. Überspannungsschutzvorrichtungen innerhalb elektronischer Geräte können beispielsweise mit Suppressordioden, Varistoren, Schutzdioden sowie mit Störschutzkondensatoren realisiert werden.

Eine Überspannungsschutzvorrichtung zwischen einen aktiven Leiter L und einem Neutralleiter N ist allerdings nicht geeignet, durch asymmetrische Überspannungen, also Überspannungen zumindest eines der Leiter L, N gegen den Schutzleiter PE, verursachte Überspannungen auf den Versorgungsleitungen zu dem Leuchtmittel 3 zu verhindern.

Die erfindungsgemäße Vorrichtung aus einer Anordnung eines Betriebsgeräts 3 und eines Leuchtmittels 2 weist allerdings zusätzlich ein Impedanzelement 8 verbunden mit einem Anschlusspunkt 7.2 auf der Versorgungsleitung LED⁻ zu einem Anschlusspunkt 8.1 einer virtuellen Masse auf, die mit dem PE-Schutzleiter auf demselben Potential liegen kann, aber nicht muss. Dieses Impedanzelement 8 kann ebenso auf der Versorgungsleitung LED⁺ von einem weiteren Anschlusspunkt 5.1 zu der virtuellen Masse verbunden angeordnet sein. Eine virtuelle Masse ist eine Punkt einer elektrischen (Schaltungs-) Anordnung, der trotz fließender Ströme ein Massepotential aufweist, jedoch nicht direkt mit der Schutzerde bzw. dem Schutzleiter PE verbunden sein muss.

Eine solche virtuelle Masse kann durch ein größeres Bauteil einer Leuchte ausgebildet werden, die mit dem Leuchtmittel 3 ausgestattet ist. Dabei handelt es sich um ein Bauteil aus leitfähigem Material, beispielsweise ein metallisches Gehäuse der Leuchte. Das Potential dieser virtuellen Masse in Form eines metallischen Gehäuses muss dabei nicht mit dem Potential des PE-Leiters in engerem Sinne übereinstimmen.

## Patentansprüche

1. Vorrichtung, die ein Leuchtmittel (2), ein Kühlelement (9.1) und ein Betriebsgerät (3) für das Leuchtmittel (2) umfasst,
wobei das Leuchtmittel (2) zumindest einen Eingangsanschluss (7.2) zur Kopplung des Leuchtmittels (2) mit dem Betriebsgerät (3) umfasst, und wobei die Vorrichtung weiter ein mit dem zumindest einen Eingangsanschluss (7.2) verbundenes Impedanzelement (8) umfasst, und wobei das Kühlelement (9.1) um das Leuchtmittel (2) angeordnet ist, **dadurch gekennzeichnet, dass** das Impedanzelement (8) den zumindest einen Eingangsanschluss (7.2) zu einem Anschlusspunkt des Kühlelements (9.1), welches eine virtuelle Masse aufweist, verbindet,
wobei das Impedanzelement (8) mindestens einen Kondensator (9) und einen parallel zu dem mindestens einen Kondensator (9) angeordneten Widerstand (10) umfasst.

2. Vorrichtung nach Anspruch 1, **dadurch gekennzeichnet,**
**dass** das Leuchtmittel (2) mindestens eine Leuchtdiode (2.1) umfasst und das Impedanzelement des Eingangsanschlusses mit der virtuellen Masse verbindet.

3. Vorrichtung nach Anspruch 1 oder 2, **dadurch gekennzeichnet,**
**dass** das Impedanzelement (8) in einer Ausgangsstufe des Betriebsgeräts (3), oder
außerhalb des Betriebsgeräts (3) und des Leuchtmittels (2) , oder
an dem Eingangsanschluss (7.2) und innerhalb des Leuchtmittels (2) angeordnet ist.

4. Leuchte, **dadurch gekennzeichnet,**
**dass** die Leuchte (12) eine Vorrichtung nach einem der Ansprüche 1 bis 3 umfasst.

5. Leuchte nach Anspruch 4, **dadurch gekennzeichnet,**
**dass** die Leuchte ein leitfähiges Gehäuse umfasst, und
das Impedanzelement (8) von dem zumindest einen Eingangsanschluss (7.2) des zumindest einen Leuchtmittels (2) der Vorrichtung zu dem leitfähigen Gehäuse (19) der Leuchte (12) als der virtuellen Masse verbindend angeordnet ist.

6. Leuchte nach Anspruch 4 oder 5, **dadurch gekennzeichnet,**
**dass** die Leuchte (12) im Außenbereich verwendbar ausgelegt ist.

## Claims

1. A device, which comprises a lighting means (2), a cooling element (9.1) and an operating device (3) for the lighting means (2),
wherein the lighting means (2) comprises at least one input connection (7.2) for coupling the lighting means (2) with the operating device (3), and wherein the device further comprises an impedance element (8) connected at least to one input connection (7.2), and wherein the cooling element (9.1) is arranged around the lighting means (2), **characterized in that**
the impedance element (8) connects the at least one input connection (7.2) to a connection point of the cooling element (9.1), which has a virtual ground,
wherein the impedance element (8) comprises at least one capacitor (9) and a resistor (10) arranged parallel to the at least one capacitor (9).

2. The device according to Claim 1, **characterized in**
**that** the lighting means (2) comprises at least one light-emitting diode (2.1) and connects the impedance element of the input connection to the virtual ground.

3. The device according to Claim 1 or 2, **characterized in**
**that** the impedance element (8) is arranged in an output stage of the operating device (3),
or
outside the operating device (3) and the lighting means (2), or at the input connection (7.2) and inside the lighting means (2).

4. A luminaire, **characterized in**
**that** the luminaire (12) comprises a device according to any one of Claims 1 to 3.

5. The luminaire according to Claim 4, **characterized in**
**that** the luminaire comprises a conductive housing, and the impedance element (8) is arranged in a connecting manner from the at least one input connection (7.2) of the at least one lighting means (2) of the device to the conductive housing (19) of the luminaire (12) as the virtual ground.

6. The luminaire according to Claim 4 or 5, **characterized in**
**that** the luminaire (12) is designed such that it can be used outdoors.

## Revendications

1. Dispositif qui comprend un luminaire (2), un élément de refroidissement (9.1) et un appareil pour le fonctionnement (3) pour le luminaire (2),
le luminaire (2) comprenant au moins une connexion d'entrée (7.2) pour l'accouplement du luminaire (2) avec l'appareil pour le fonctionnement (3), et le dispositif comprenant également un élément d'impédance (8) raccordé à la connexion d'entrée (7.2) au moins au nombre de un, et l'élément de refroidissement (9.1) étant disposé autour du luminaire (2), **caractérisé en ce que**
l'élément d'impédance (8) raccorde la connexion d'entrée (7.2) au moins au nombre de un à un point de connexion de l'élément de refroidissement (9.1) qui comporte une masse virtuelle,
l'élément d'impédance (8) comprenant au moins un condensateur (9) et une résistance (10) disposée parallèlement au condensateur (9) au moins au nombre de un.

2. Dispositif selon la revendication 1, **caractérisé en ce que**
le luminaire (2) comprend au moins une diode électroluminescente (2.1) et raccorde l'élément d'impédance de la connexion d'entrée à la masse virtuelle.

3. Dispositif selon la revendication 1 ou 2, **caractérisé en ce que**
l'élément d'impédance (8) est disposé dans un étage de sortie de l'appareil pour le fonctionnement (3) ou
à l'extérieur de l'appareil pour le fonctionnement (3) et du luminaire (2), ou
sur la connexion d'entrée (7.2) et à l'intérieur du luminaire (2) .

4. Lampe, **caractérisée en ce que**
la lampe (12) comprend un dispositif selon l'une des revendications 1 à 3.

5. Lampe selon la revendication 4, **caractérisée en ce que** la lampe comprend un boîtier conducteur, et
raccorde l'élément d'impédance (8) à partir de la connexion d'entrée (7.2) au moins au nombre de un du luminaire (2) au moins au nombre de un du dispositif au boîtier (19) conducteur de la lampe (12) en tant que masse virtuelle.

6. Lampe selon la revendication 4 ou 5, **caractérisée en ce** la lampe (12) est conçue pour être utilisable à l'extérieur.
